# EUROPÄISCHE PATENTSCHRIFT

(11) **EP 0 536 448 B1**
(45) Veröffentlichungstag und Bekanntmachung des Hinweises auf die Patenterteilung: **07.08.1996**
(21) Anmeldenummer: 91250276.2
(22) Anmeldetag: 10.10.1991
(51) Int. Cl.: B29C 45/77

(54) **Verfahren und Einrichtung zur Messwerterfassung und Steuerung von Spritzgiessmaschinen und Pressen**
Process and equipment for determination of measured values and for controlling of injection moulding machines and presses
Procédé et dispositif d'enregistrement des données et de commande des presses à mouler par injection et des presses

(43) Veröffentlichungstag der Anmeldung: 14.04.1993
(73) Patentinhaber: CKT Kunststoffverarbeitungstechnik GmbH Chemnitz, D-09322 Tauscha (DE)
(72) Erfinder: Hummel, Erhard, Dipl.-Ing., O-9002 Chemnitz (DE)
(74) Vertreter: Findeisen, Andreas

(56) Entgegenhaltungen:
- EP-A- 0 233 548
- DE-A- 3 036 441
- DE-A- 4 035 773
- JP-A-59 146 823
- PATENT ABSTRACTS OF JAPAN vol. 7, no. 82 (P-189)(1227) 6. April 1983 &JP-A-58 012 017 (DAIKIN KOGYO K.K.) 24 Januar 1983
- PATENT ABSTRACTS OF JAPAN vol. 12, no. 325 (M-737)(3172) 5. September 1988 & JP-A-63 092 426 (NIPPON PLAST CO LTD) 22 April 1988
- PATENT ABSTRACTS OF JAPAN vol. 12, no. 52 (M-668)(2899) 17. Februar 1988 & JP-A-62 199 421 (JAPAN STEEL WORKS LTD) 3, September 1987
- PATENT ABSTRACTS OF JAPAN vol. 6, no. 101 (M-135)(979) 10. Juni 1982 & JP-A-57 034 934 (UBE KOSAN K.K.) 25. Februar 1982
- PATENT ABSTRACTS OF JAPAN vol. 11, no. 125 (M-582)(2572) 18. April 1987 & JP-A-61 266 217 (MEIKI CO LTD) 25 November 1986

## Beschreibung

Die Erfindung bezieht sich auf ein Verfahren zur Meßwerterfassung und Steuerung von hydraulisch betriebenen Spritzgießmaschinen und Pressen, bei denen für den Antriebsölstrom eines oder mehrerer Arbeitsglieder ein Begrenzungsdruck vorgesehen ist, bei dessen Erreichen die Antriebsölstrommenge soweit reduziert wird, daß der vorgegebene Begrenzungsdruck gehalten wird, sowie auf eine Einrichtung zur digitalen Meßwerterfassung zur Durchführung des Verfahrens.

Die Steuerung des Ablaufes nacheinander folgender Arbeitszyklen ist für die Qualität der hergestellten Werkstücke und für die Wirtschaftlichkeit der Herstellung von erheblicher Bedeutung.
Die Meßwerterfassung ist zur Darstellung der Eingangswerte für die Steuerung wesentlich am Erfolg beteiligt.

Eine bisherige dem Oberbegriff entsprechende Verfahrenslösung stellten EP 0233548 A2 und DE 4035773 dar.

Im EP 0233548 A2 wird ein Verfahren und eine dazugehörige Einrichtung einer hydraulischen Spritzgießmaschine beschrieben, bei dem die Zeit zwischen dem Umschaltwert auf Nachdruck und dem Erreichen eines vorgewählten Druckes oder des Druckes bei Förderstromreduzierung oder die Zeit zwischen einem ersten Erreichen eines vorgewählten Druckes oder des Druckes bei Förderstromreduzierung und einem zweiten Erreichen des gleichen oder eines anderen vorgewählten Druckes nach der Förderstromreduzierung oder der Spritzkolbenhub zum Zeitpunkt der Förderstromreduzierung erfaßt wird. Weiterhin wird die Änderung des Spritzkolbenhubes bis zum Erreichen eines vorgewählten Druckes oder des Druckes vor Beginn der Förderstromreduzierung oder der Betrag der Druckdifferenz zwischen dem maximalen Druck bei Förderstromreduzierung und dem minimalen Druck nach der Förderstromreduzierung erfaßt und als Vergleichsgröße für die Regelung, Steuerung und/oder Überwachung verwendet. Nachteilig bei diesem Verfahren ist, daß bei Werkzeugen mit geringem Fließwiderstand eine geringe Spritzkraftänderung oder eine Änderung des Spritzkraftbedarfes zu einer erheblichen Verschiebung des Umschaltwertes von Spritzen auf Nachdrücken in Richtung der noch nicht vollständigen Werkzeugfüllung führt.

Bei warmem Vorkammeranguß, Heißkanalanguß und sehr engen Anschnitten kann ein Wechsel des Umschaltwertes von vollständiger Werkzeugfüllung zu einer Kraftspitze bei der Durchspritzung des Angusses, der teilweise versiegeln kann, führen. In diesem Falle ist das Verfahren nach EP 0233548 nur als Einrichthilfe und Steuerung der Druckhöhe bei einer hydraulischen Druckumschaltung, nicht aber zur Prozessregelung geeignet.

Zu geringe Auflösegenauigkeit des Spritzdruckes und zu starke Beeinflussung des Kraftbedarfes bei der Werkzeugfüllung bei Parameterschwankungen, Plastrohstoffeinflüssen und Änderungen der Umgebungsbedingungen können Schwankungen in der Formteilqualität verursachen.

Es treten teilweise erhebliche Schwankungen im Druckbedarf für den Werkzeugfüllvorgang von Spritzung zu Spritzung auf, und der erforderliche Änderungsbetrag des der Umschaltschwelle entsprechenden Drucksollwertes ist so groß, daß bei den vorgesehenen Umschaltmöglichkeiten in Abhängigkeit vom Spritzdruck für bestimmte Werkzeuge und Maschineneinsatzbedingungen ein erhebliches Vorverlegen des Umschaltwertes vor den eigentlichen volumetrischen Füllpunkt während der Regelung des Umschaltwertes möglich ist.

Um die Wirkung dieser Mängel zu verringem, wird in DE 4035773 mit zwei Spritzkraftbegrenzungswerten gearbeitet. Mit dem Ansprechen des ersten Spritzkraftwertes wird eine erste Zeit gestartet. Nach Ablauf der ersten Zeit oder dem Ansprechen des zweiten Spritzkraftwertes wird der Ölstrom reduziert. Mit der Ölstromreduzierung wird eine zweite Zeit gestartet. Innerhalb der zweiten Zeit wird kontrolliert, ob der erste oder der zweite Spritzkraftwert über dem prozeßabhängigen Spritzkraftbedarf liegt. Abhängig von diesem Ergebnis kann dann eine Korrektur der Prozeßparameter erfolgen, womit der Umschaltpunkt korrigiert wird.

In beiden vorgenannten Verfahren wird von einem für den jeweiligen Spritzzyklus vorgegebenen Umschaltpunkt ausgegangen und durch die genannten Verfahren die Umschaltpunktfestlegung überprüft und gegebenenfalls deren direkte oder indirekte Korrektur durchgeführt.

Grundsätzlich wird bei EP 0233548 und DE 4035773 eine vorgegebene hydraulische Leistung mit dem zu einem vorgegebenen Umschaltzeitpunkt auf Nachdruck prozessabhängig erreichten Leistungsbedarf verglichen und abhängig davon der Umschaltpunkt auf Nachdruck überwacht, gesteuert und/oder von Schuß zu Schuß geregelt. Die Verfahren sind nutzbar für die Überwachung des Prozeßverlaufes oder die Prozeßregelung bei hydraulisch angetriebenen Arbeitseinrichtungen, bei denen das kraftbegrenzte Arbeitsglied durch Wirkung des ablaufenden Prozesses abgebremst wird, wie Preß-, Kompressions-, Fließ-, Streck-, Zieh- und Stauchvorgänge.

In DE 3036441 wird in einer Spritzpreßform mittels eines Drucksensors der Forminnendruck gemessen. Abhängig vom Erreichen eines Innendruckschwellwertes wird auf einen geringeren Preßdruck umgeschaltet. Dabei handelt es sich um ein Grenzwertumschaltverfahren für den Nachdruck. Nach dem Umschalten auf Nachdruck wird wegen der dann wirksamen Druckbegrenzung die Spritzkolbenbewegung prozeßabhängig abgebremst. Die maximale Forminnendruckhöhe stellt sich prozeßabhängig ein. Sie ist abhängig von Schwankungen der Maschinen- und Werkzeugparameter, der Formmasseneigenschaften und der äußeren Einflüsse. Die Formteilqualität beeinflussende Prozeßkorrekturen sind nicht vorgesehen.

Bei der Steuerung hydraulischer Ölströme ist es üblich, die Druckdifferenz über hydraulische Widerstände zur Realisierung konstanter Ölströme zu regeln. Eine derartige Ölstromsteuerung mit überlagerter Drucksteuerung, wie sie in Spritzgießmaschinen üblich ist, wird in JP-A-58-12017 beschrieben. Die Druckdifferenz über ein Drosselventil wird durch Zwischenschaltung eines hydraulisch geregelten 2/3-Wegeventils verstärkt und dient der Ölstromsteuerung mittels einer Stellpumpe. Zur Drucksteuerung kann zwischen dem Drosselventil und dem Arbeitsglied eine Förderstromreduzierung mittels des Ansprechens eines Druckbegrenzungsventiles durchgeführt werden. Über das Drosselventil bleibt die Druckdifferenz nahezu konstant.

Die Erfindung will Abhilfe für die zu den Verfahren nach EP 0233548, DE 4035773 und DE 3036441 genannten Nachteile schaffen.
Aufgabe der Erfindung ist es, ausgehend, vom momentanen Leistungsbedarf, eine adaptive Parametersteuerung und Parameterüberwachung bei Spritzgießmaschinen und Pressen, zu schaffen.

Diese Aufgabe wird erfindungsgemäß durch ein Verfahren nach Anspruch 1 und durch eine Einrichtung nach Anspruch 4 gelöst.

Zweckmäßige Weiterbildungen der Erfindung sind in den abhängigen Anspruchen beschrieben.

Durch die Erfindung werden folgende Vorteile erreicht: Es können für definierte Druckdifferenzen über eine im Druckbegrenzungsfall unveränderliche Drosselstelle Signale ausgegeben werden. Die Beträge der Druckdifferenzen sind unabhängig von der vorher eingestellten Drosselöffnungsweite.
Die erhaltenen Signale entsprechen definierten Ölströmen und dem entsprechend einem definierten Leistungsbedarf am Arbeitsglied. Das Signal "Druckdifferenz nahe Null" definiert den Zustand "Bewegung beendet". Der zeitliche Abstand der zwei Signale gestattet, bei Preß-, Kompressions-, Fließ-, Streck-, Zieh- und Stauchvorgängen, den Prozeßverlauf zu überwachen und ermöglicht eine Prozeßregelung entsprechend dem Leistungsbedarf. Bei einer Veränderung der Drosselöffnungsweite oder der Begrenzungsdruckhöhe ist keine Veränderung am Meßglied erforderlich.

Nachfolgend wird die Erfindung an je einem Ausführungsbeispiel für das Verfahren und die Einrichtung näher erläutert. In den Zeichnungen zeigen:

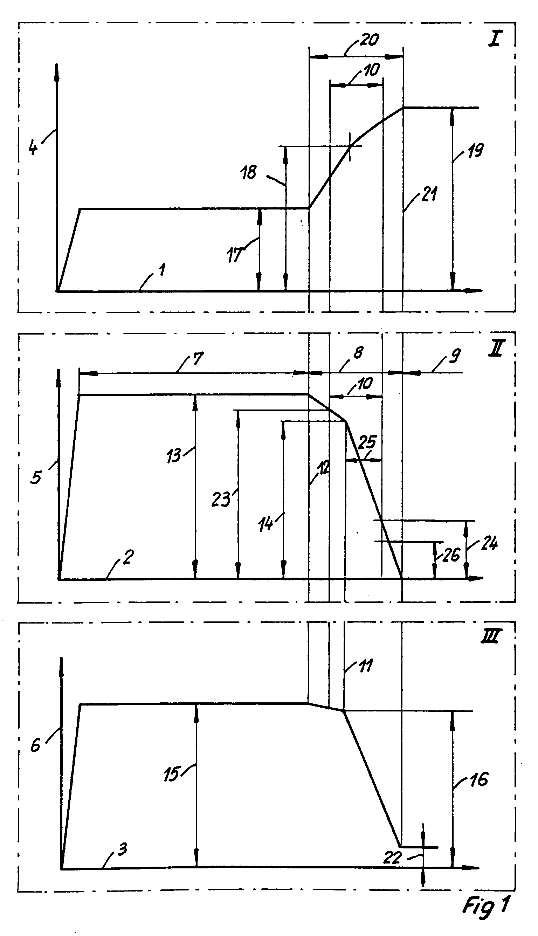

- Fig. 1: die Diagramme I, II und III, wobei über den Zeitachsen 1, 2, 3
in I die Kraft am Arbeitsglied, Ordinate 4,
in II der Druckdifferenzverlauf, Ordinate 5,
in III der Leistungsbedarf am Arbeitsglied, Ordinate 6, dargestellt sind.
- Fig. 2: den hydraulischen Schaltplan der Spritzseite einer Spritzgießmaschine
- Fig. 3: die Einrichtung zur Meßwerterfassung in der Stellung - Bewegung beendet -

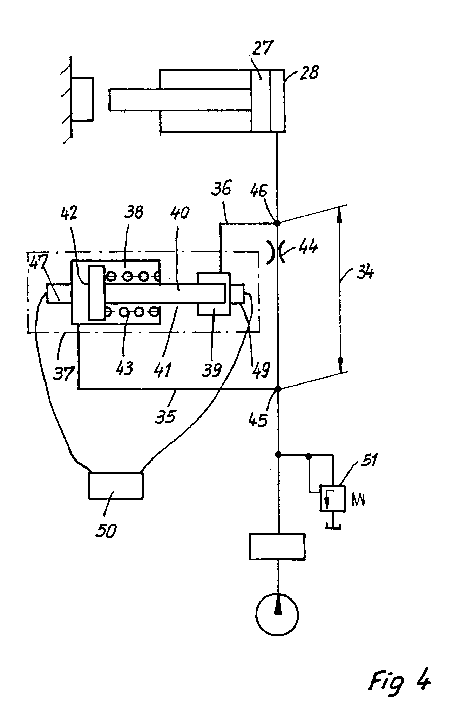

- Fig. 4: die Einrichtung in Fig. 3 in der Stellung - in Bewegung -

Bei hydraulisch angetriebenen Spritzgießmaschinen oder Pressen sind folgende Phasen zu unterscheiden:
- eine Bewegungsphase 7 mit konstantem oder geringfügig zunehmendem Kraftbedarf;
- eine Arbeitphase 8, wie Komprimieren, Ziehen, Stauchen und
- eine Krafthaltephase 9 nach Abschluß eines Werkzeugfüllvorganges, beispielsweise zum Fixieren der Gestalt des Produktes während einer Erstarrungsphase oder zum kraftschlüssigen Fixieren von Arbeitseinheiten oder Werkzeugen.

Für die Prozeßsteuerung sind der Anfang und das Ende der Arbeitsphase 8 bzw. ein Arbeitsphasenteil 10 von besonderer Bedeutung. Während der Arbeitsphase 8 kommt es zum Zeitpunkt 11 zum Ansprechen der Druckbegrenzungseinrichtung. Zum Zeitpunkt 12, bei dem der Kraftanstieg beginnt, verringert sich der am Arbeitsglied aktive Druckmedienstrom.
Über eine dem Arbeitsglied vorgelagerte Drosselstrecke verringert sich damit bis zum Zeitpunkt 11 des Ansprechens der Druckbegrenzung die Druckdifferenz vom Niveau 13 auf das Niveau 14. Analog zur Druckdifferenz verändert sich der Leistungsbedarf am Arbeitsglied vom Niveau 15 auf das Niveau 16.

Während der Bewegungsphase 7 war der vom Arbeitsglied aufzubringende Kraftbedarf auf dem Niveau 17. Während der Arbeitsphase 8 sprach bei dem Niveau 18 für den Kraftbedarf die Druckbegrenzungseinrichtung an.
Das Ende der Arbeitsphase 8 ist durch den Stillstand der vom Arbeitsglied ausgeführten Bewegung und durch das Erreichen des Niveaus 19 der Kraft gekennzeichnet.
Der Arbeitsphase 8 schließt sich nun die Krafthaltephase 9 an, bei der die Kraft auf dem Niveau 19 gehalten wird.

Der Beginn, das Ende und die Zeitdauer 20 der Arbeitsphase 8 sind den vom Arbeitsglied ausgeführten Arbeitsprozeß charakterisierende Größen. Während der Beginn der Arbeitsphase 8 zum Zeitpunkt 12 infolge des sich am Arbeitsglied druckabhängig verringernden Ölstromes auch ohne vorheriges Ansprechen der Druckbegrenzung signalisierbar ist, ist bei allen Bewegungen innerhalb der Arbeitsphase, die nicht durch einen festen, wegmäßig festgelegten Abschaltvorgang beendet werden, eine Druckbegrenzung erforderlich.

Durch Ermittlung der Druckdifferenz über eine dem Arbeitsglied vorgeschaltete Drosselstrecke wird der dem Arbeitsglied zugeführte Ölstrom gemessen. Wenn der Druck begrenzt wird, stellt der Ölstrom ein Maß für den jeweils erforderlichen Leistungsbedarf am Arbeitsglied dar, der zwischen dem Zeitpunkt 11 des Ansprechens der Druckbegrenzung und dem Zeitpunkt 21 des Kolbenstillstandes vom Niveau 16 auf das sehr niedrige Niveau 22 sinkt.
Zwischen dem Zeitpunkt 12 der beginnenden Arbeitsphase und dem Zeitpunkt 11 des Ansprechens der Druckbegrenzungseinrichtung kann es bei sehr steifen hydromechanischen Systemen auch zu einer Zunahme des Leistungsbedarfes am Arbeitsglied kommen, so daß das Niveau 16 auch über dem Niveau 15 liegen kann.

Der Zeitpunkt des Beginnes der Verringerung der Antriebsölstrommenge ist nicht exakt ermittelbar. Deswegen wird für Zwecke der Steuerung von Prozeßparametern ein Arbeitsphasenteil 10, beginnend mit dem Druckdifferenzwert 23 und einem zweiten Druckdifferenzwert 24, verwendet.
Voraussetzung ist für die Funktion, daß vor dem Erreichen des zweiten Druckdifferenzwertes 24 die Druckbegrenzung wirkt, wobei ein möglichst langer Zeitanteil 25 des Arbeitsphasenteiles 10 bei Wirkung der Druckbegrenzung vorhanden sein sollte.

Je nach Aufgabe kann für die Charakterisierung des Beginns der Reduzierung der Antriebsölstrommenge der Druckdifferenzwert 23 zwischen 50 Prozent und 100 Prozent des Niveaus 13 des Druckdifferenzwertes in der Bewegungsphase betragen. Der zweite Druckdifferenzwert 24 sollte nicht mehr als 30 Prozent des Niveaus 13 des Druckdifferenzwertes in der Bewegungsphase betragen.
Bei Ablaufsteuerungen wird oftmals nach Beendigung der Arbeitsphase der nächste Arbeitsschritt eingeleitet.
Wie aus dem Diagramm II erkennbar ist, ist am Ende der Arbeitsphase die Druckdifferenz über die Drosselstrecke gleich Null. Bei Formbildungsprozessen, bei denen noch ein geringes Nachführen von Material, beispielsweise infolge temperaturbedingter Schwindung, erfolgt, wird die Druckdifferenz Null nur annähernd erreicht.
Für derartige Steuerfunktionen wird ein Druckdifferenzwert Null 26 so definiert festgelegt, daß er größer als Null ist, maximal jedoch 30 Prozent des Niveaus 13 der Druckdifferenz in der Bewegungsphase besitzt. Die Druckdifferenzwerte werden als digitale Signale, einen exakten Zeitpunkt der jeweiligen Arbeitsphase kennzeichnende Größen, dargestellt.

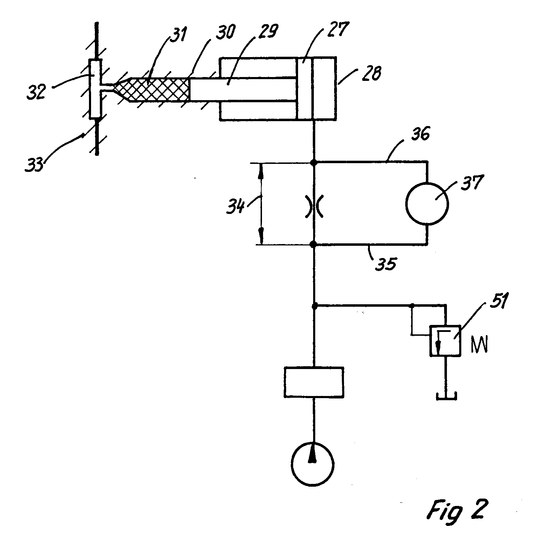

Der Verfahrensablauf wird an einer Spritzgießmaschine nach Fig. 2 erläutert. Durch Verschieben des Kolbens 27 des Arbeitsgliedes 28 wird der Kolben 29 des Kunststoffvorratssystems 30 verschoben und Kunststoffmasse aus dem Raum 31 in den Raum 32 des Werkzeuges 33 gespritzt.
Dabei muß gesichert werden, daß das Werkzeug richtig gefüllt und die Kunststoffmasse verdichtet ist.
Um ein Eintreten von Kunststoffmasse in die Werkzeugtrennebene zu verhindern, muß exakt am Füllpunkt auf Nachdruck umgeschaltet werden. Bei Anwendung des vorgeschlagenen Verfahrens wird einmal durch die Kontrolle der Zeit für die Arbeitsphase 8 der Begrenzungsdruck vorgewählt. Bei zu niedrig gewähltem Begrenzungsdruck verlängert sich die Arbeitsphase. Mit dem richtigen Begrenzungsdruck besitzt die Arbeitsphase die kürzeste Zeit.
Bei Austreten von Kunststoff in die Werkzeugtrennebene verlängert sich die Zeit der Arbeitsphase wieder. Somit kann eine Rechnersteuerung durch Erfassen der Zeitdauer der gesamten Arbeitsphase 8 oder eines definierten Arbeitsphasenteiles 10 den Spritzdruck oder den Druckbedarf bestimmende Parameter steuern.

Bei vorgegebener Druckbegrenzung wird dieser Zeitraum zur Überwachung der Prozeßkonstanz als die für den jeweiligen Werkzeugfüllvorgang kennzeichnende Meßgröße im Qualitätsüberwachungssystem verwendet. Unmittelbar vor dem Erreichen des Stillstandes des Kolbens 29 ist bei richtiger Druckbegrenzung der richtige Füllpunkt zur Umschaltung auf Nachdruck erreicht.
In Fig. 2 wird die Druckdifferenz über die Drosselstrecke 34 gemessen. Dabei wird der Druck vor der Drosselstrecke 34 über die Verbindung 35 und hinter der Drosselstrecke 34 über die Verbindung 36 erfaßt und über eine Einrichtung zur Meßwerterfassung 37 die Druckdifferenz ermittelt. Für den Umschaltpunkt auf Nachdruck ist die Reproduzierbarkeit des Umschaltpunktes wichtiger als das Erreichen der Druckdifferenz Null. Die Druckdifferenz sollte dabei höchstens 30 Prozent der Druckdifferenz in der Bewegungsphase betragen.
In einer Spritzgießmaschine muß die Spritzeinheit an ein Werkzeug unter Erzeugung eines Düsenanpreßdruckes herangefahren werden. Auch hier wird durch das Signal Druckdifferenz Null, wobei hierfür eine Druckdifferenz von 70 Prozent gegenüber der Bewegungsphase ausreicht, der nächste Arbeitsschritt Spritzen eingeleitet. Da die Reduzierung des Förderstromes erst durch die Druckbegrenzung in größerem Maße geschieht, tritt bereits nach einer Senkung der Druckdifferenz auf 70 Prozent gegenüber der Bewegungsphase keine wesentliche Druckerhöhung mehr auf.

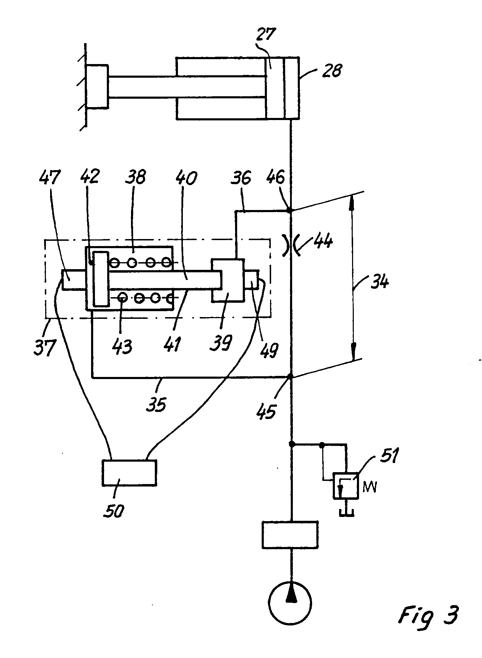

Die Einrichtung zur Meßwerterfassung 37 (Fig. 3) besitzt zwei mit Meßdrücken beaufschlagte Zylinder 38 und 39, die um einen Kolben 40 angeordnet und durch eine Bohrung 41 verbunden sind. In beide Zylinder 38 und 39 ragt der diese Zylinder 38 und 39 gegeneinander gemeinsam mit der Bohrung 41 abdichtende Kolben 40. Dieser Kolben 40 ist auf einer Kolbenseite 42 durch eine Feder 43 kraftbelastet. Bei senkrechtem Aufbau mit der Kolbenseite 42 nach unten kann in einigen Fällen auf die Feder 43 verzichtet und das Eigengewicht genutzt werden.
Der Zylinder 38, der im drucklosen Zustand das kleinste Volumen besitzt, ist vor der Drosselstelle 44 über die hydraulische Verbindung 35 im Abzweig 45 angeschlossen. Am Abzweig 46, hinter der Drosselstelle 44, ist über die hydraulische Verbindung 36 der sich mit höher werdender Druckdifferenz im Volumen verringernde Zylinder 39 angeschlossen.
Mindestens an dem Zylinder 38, der im drucklosen Zustand das kleinste Volumen hat, ist ein elektrisches Meßgerät 47, nämlich ein Endschalter oder Näherungsinitiator, zur Erfassung der Lage der Kolbenseite 42 angeordnet. Für den Aufbau von Regelungen wird auch die Lage der anderen Kolbenseite 48 durch ein elektrisches Meßgerät 49 erfaßt.
Die Meßwerte werden digital erfaßt.

Die Funktion der Einrichtung zur Meßwerterfassung 37 ist folgende:
Infolge der Druckdifferenz über den druckverlustbehafteten Leitungsabschnitt 34 herrscht im Zylinder 38 ein die Kraft der Feder 43 überwindender Druck, der den Kolben 40 in den Zylinder 39 drückt. Über das elektrische Meßgerät 49 wird ein Signal der Kolbenlage an die Steuerung 50 ausgegeben.
Erhöht sich nun der Arbeitswiderstand am Kolben 27, so kommt es zum Ansprechen des Druckbegrenzungsventils 51. Damit verändert sich der über die Drosselstelle 44 fließende Ölstrom, und es stellt sich eine geringere Druckdifferenz über den druckverlustbehafteten Leitungsabschnitt 34 ein.
Durch die Feder 42 wird mit sich verringernder Druckdifferenz der Kolben 40 zunehmend in den Zylinder 38 verschoben. Dabei wird das Signal der Kolbenlage für hohe Druckdifferenz des elektrischen Meßgerätes 49 abgeschaltet.
Bei voller Öffnung des Druckbegrenzungsventils 51 kommt es zu einer Annäherung der Kolbenseite 42 an das elektrische Meßgerät 47. Über dieses wird das Signal Druckdifferenz Null ausgegeben.
Für Regelungen wird die Zeitdauer zwischen dem Beginn der Druckdifferenzänderung - Abschalten des Signals des elektrischen Meßgerätes 49 - und dem Druckdifferenzwert Null - dem Zuschalten des Signals des elektrischen Meßgerätes 47- verwendet. Das Signal Druckdifferenzwert Null wird sehr günstig für die Zuschaltung des folgenden Arbeitsschrittes verwendet.

## Patentansprüche

1. Verfahren zur Meßwerterfassung und Steuerung von hydraulisch angetriebenen Spritzgießmaschinen und Pressen, bei denen für den Antriebsölstrom eines oder mehrerer Arbeitsglieder (28) ein Begrenzungsdruck vorgesehen ist, bei dessen Erreichen die Antriebsölstrommenge soweit reduziert wird, daß der vorgegebene Begrenzungsdruck gehalten wird,
dadurch gekennzeichnet,
daß in einem Leitungsabschnitt zwischen dem Ort der Förderstromreduzierung während der Druckbegrenzung und dem Arbeitsglied (28) über eine während der Druckbegrenzung unveränderliche Drosselstrecke (34) die Druckdifferenz erfaßt wird und
daß ein erster Druckdifferenzwert bei Beginn der Reduzierung der Antriebsölstrommenge erfaßt wird und die Zeitdauer bis zum Erreichen eines zweiten Druckdifferenzwertes, der größer oder gleich einem Druckdifferenzwert Null ist und einer weiteren Reduzierung der Antriebsölstrommenge entspricht, zur Steuerung der im nachfolgenden Arbeitszyklus vorgegebenen Parameter verwendet wird und/oder
daß der Druckdifferenzwert Null zur Steuerung des nachfolgenden Arbeitsschrittes verwendet wird und
daß die Druckdifferenzwerte als digitale Signale dargestellt werden und als Maß für den momentanen Leistungsbedarf am Arbeitsglied ausgewertet werden.

2. Verfahren nach Anspruch 1, dadurch gekennzeichnet, daß der erste Druckdifferenzwert bis zur Reduzierung der Antriebsölstrommenge um 50% gemessen wird.

3. Verfahren nach Anspruch 1, dadurch gekennzeichnt, daß die Zeitdauer zwischen dem ersten und zweiten Druckdifferenzwert ausschließlich zur Qualitätskontrolle genutzt wird.

4. Einrichtung zur digitalen Meßwerterfassung zur Durchführung des Verfahrens nach Anspruch 1, dadurch gekennzeichnet, daß zwei mit Meßdrücken beaufschlagte Zylinder (38; 39) um einen Kolben (40) angeordnet und durch eine Bohrung (41) verbunden sind, in der der in beide Zylinder (38; 39) ragende Kolben (40) druckdicht gelagert ist, der auf einer Kolbenseite (42) kraftbelastet ist und daß der Zylinder (38), der im drucklosen Zustand das kleinste Volumen hat, vor der Drosselstelle (44) und der andere nach der Drosselstelle (44) angeschlossen ist und daß mindestens an dem Zylinder (38), der im drucklosen Zustand das kleinste Volumen hat, ein elektrisches Meßgerät (47) zur Erfassung der Kolbenlage angeordnet ist.

## Claims

1. A method for recording measured values and controlling hydraulically driven injection molding machines and presses according to which a limiting pressure is provided for the oil flowing to the drive of one or more working members (28), and when this pressure is reached, the amount of oil is reduced to the extent necessary for maintaining the predefined limiting pressure,
characterized in that
the pressure differential is recorded in a pipe section between the point at which the transport flow is reduced during the limitation of pressure and the working member (28) via an unalterable regulating section (34), and that an initial pressure differential value is recorded at the start of reduction of the amount of oil flowing to the drive, and that the amount of time which passes until a second pressure differential value is reached, the second value being greater or less than a pressure differential value of zero and corresponding to a further reduction of the amount of oil flowing to the drive, is used for controlling the parameters defined in the next work cycle, and/or
that the pressure differential value of zero is used for controlling the subsequent step and
that the pressure differential values are represented as digital signals and are evaluated at the working member as quantities for the capacity required at the working member at the moment.

2. A method as claimed in Claim 1, characterized in that the initial pressure differential value is measured at 50% until the amount of oil flowing to the drive is reduced.

3. A method as claimed in Claim 1, characterized in that the amount of time which passes between recording of the first and the second pressure differential value is used for quality control exclusively.

4. A device for recording measured values in digital form for the purpose of implementing the method as claimed in Claim 1, characterized in that two cylinders (38, 39) to which measuring pressures are applied are located around a plunger (40) and connected by a drilled hole (41) in which the plunger (40) which extends into both cylinders (38, 39) and to one side of which force is applied is pressure sealed, and that the cylinder (38) with the smallest volume when unpressurized is connected in front of the regulating point (44) and the other is connected after the regulating point (44), and that an electrical measuring device (47) designed to record the plunger's length is attached at least to the cylinder (38) with the smallest volume when unpressurized.

## Revendications

1. Procédé pour la mesure et la commande de machines à injection et de presses entraînées hydrauliquement pour lesquelles on a prévu une limitation de pression dans le circuit d'huile de commande d'un ou de plusieurs éléments de travail, le débit d'huile de commande étant réduit lorsque cette limite est atteinte de manière à ce que la pression de limitation prédéfinie reste constante,
caractérisé en ce qu'
on enregistre la différence de pression dans une section de circuit entre le lieu de réduction de débit d'huile et l'élément de travail sur une distance d'étranglement (34) invariable pendant la phase de limitation de pression
ainsi qu'une première valeur mesurée de différence de pression au début de la réduction du débit d'huile de commande et que le temps nécessaire pour atteindre une deuxième valeur mesurée de différence de pression pouvant être supérieure ou égale à une valeur zéro mesurée de diférence de pression et correspondant à une nouvelle réduction de débit d'huile de commande, soit utilisé pour la commande des paramètres prédéfinis dans le cycle de travail suivant,
et/ou en ce que la valeur zéro de la différence de pression soit utilisée pour l'étape de travail suivante et
en ce que les valeurs mesurées de différence de pression soient représentées comme des signaux numériques et soient exploitées comme cote pour mesurer le besoin momentané en puissance sur l'élément de travail.

2. Procédé selon la revendication 1
caractérisé en ce qu'on mesure la première valeur de différence de pression jusqu'à ce que la réduction de débit d'huile de commande atteigne 50%.

3. Procédé selon la revendication 1
caractérisé en ce qu'on utilise la durée entre la première et la deuxième valeur mesurée de différence de pression uniquement pour le contrôle de qualité.

4. Dispositif de mesure numérique pour l'emploi du procédé selon la revendication caractérisé en ce que deux vérins (38, 39) admettant deux pressions de mesure, sont situés autour d'un piston (40) et reliés par un alésage (41) dans lequel le piston (40) pénétrant dans les deux vérins (38, 39) et subissant une force sur un côté (42), est logé sur paliers de manière étanche et
en ce que le vérin (36) de plus petit volume dans un état sans pression est raccordé avant l'étrangleur (44) et que l'autre vérin est raccordé après l'étrangleur (44) et en ce qu'on a pourvu au moins le vérin (38) de plus petit volume dans un état sans pression d'un appareil électrique de mesure (47) pour enregistrer la position du piston.
